# EUROPÄISCHE PATENTSCHRIFT

(11) **EP 0 435 001 B1**
(45) Veröffentlichungstag und Bekanntmachung des Hinweises auf die Patenterteilung: **23.02.1994**
(21) Anmeldenummer: 90122710.8
(22) Anmeldetag: 28.11.1990
(51) Int. Cl.: D21H 13/40, B32B 5/26

(54) **Schichtstoff**
Laminat
Laminé

(30) Priorität: 23.12.1989 DE 3942813
(43) Veröffentlichungstag der Anmeldung: 03.07.1991
(73) Patentinhaber: Akzo Nobel N.V., 6824 BM Arnhem (NL)
(72) Erfinder: Dijkema, Jan, NL-7201 GB Zutphen (NL); Schelbergen, Paulus Christiaan Anthonius Maria, NL-6662 XC Elst (NL); Hofland, Jurjen Pieter, NL-6931 CH Westervoort (NL)
(74) Vertreter: Fett, Günter

(56) Entgegenhaltungen:
- EP-A- 0 110 039
- EP-A- 0 254 806
- NL-A- 7 314 675
- US-A- 4 917 714

## Beschreibung

Die Erfindung bezieht sich auf ein Verfahren zur Herstellung eines Laminats, welches aus mindestens zwei verschiedenartigen Vliesschichten aufgebaut ist, sowie auf ein nach diesem Verfahren hergestelltes Laminat.

Aus der EP-A-110 039 ist ein Laminat bekannt, welches einen Dreischichtaufbau aufweist, wobei eine erste Schicht ein Scrim sein muß, während die beiden anderen Schichten beispielsweise ein thermoplastische Endlosfilamente enthaltendes Spinnvlies und ein anorganische Fasern enthaltendes Vlies, welches auf einer Papiermaschine, also nach dem Naßverfahren hergestellt wurde. Zur Herstellung des bekannten Laminats muß das Scrim mit einem thermoplastischen Kleber beschichtet werden, um eine Bindung der Schichten untereinander zu erreichen. Die Herstellung eines solchen Laminats muß in mehreren Schritten erfolgen und ist deshalb sehr aufwendig, insbesondere auch deshalb, weil der thermoplastische Kleber auf das Scrim, ein sehr loses und labiles Gebilde, aufgetragen werden muß. Obwohl in der EP-A-110 039 ausgeführt wird, daß durch die Herstellungsart ein dünneres und flexibleres Laminat, als bisher bekannt, hergestellt werden kann, hat sich herausgestellt, daß dieses Laminat für viele Einsatzzwecke immer noch zu steif und auch häufig noch zu dick ist. Dies gilt insbesondere, wenn das Laminat zur Verstärkung von Dachbahnen eingesetzt wird.

Obwohl das aus der EP-A-110 039 bekannte Laminat leichter und wirtschaftlicher hergestellt werden kann, als bisher bekannte Laminate, bestand immer noch der Wunsch, die Herstellung solcher Laminate noch einfacher und wirtschaftlicher durchführen zu können.

Es ist deshalb Aufgabe der vorliegenden Erfindung, ein Verfahren zur Herstellung eines Laminats, insbesondere zur Verwendung zur Verstärkung von Dachbahnen, zur Verfügung zu stellen, welches besonders einfach und wirtschaftlich durchgeführt werden kann, und welches zu einem Laminat führt, welches flexibler und dünner ist als die bisher bekannten. Es ist auch Aufgabe der vorliegenden Erfindung, ein Laminat zur Verfügung zu stellen, welches deutlich flexibler ist als die bekannten Laminate und welches preisgünstig hergestellt werden kann, und welches trotz gewünschtem hohem Modul eine geringe Dicke aufweist. Hierbei wird davon ausgegangen, daß für viele Zwecke bereits ein zweischichtiger Aufbau des Laminats ausreichend ist, sofern das Laminat den gewünschten hohen Modul und genügend Widerstandskraft gegen Delamination aufweist.

Bei einem Verfahren zur Herstellung eines Laminats aus mindestens zwei Schichten, bei dem ein thermoplastische Endlosfilamente enthaltendes Spinnvlies als erste Schicht und ein nach dem Naßverfahren mit Faserkurzschnitt aus anorganischen Fasern hergestelltes Vlies, nachfolgend Naßvlies genannt, als zweite Schicht über eine gemeinsame Thermo-Druck-Behandlung miteinander verbunden werden, bei dem also trotz Gewährleistung der oben erwähnten Eigenschaften ein Scrim entfallen kann, wird die erfindungsgemäß gestellte Aufgabe dadurch gelöst, daß zur Herstellung des Naßvlieses zunächst Faserkurzschnitt, thermoplastischer Binder und ggf. weitere Zusätze in Wasser suspendiert auf eine wasserdurchlässige, die anderen Bestandteile rückhaltende Unterlage aufgebracht und zu einem Vlies getrocknet wird, und dann das getrocknete Naßvlies ohne weitere Zugabe von Binder mit dem Spinnvlies vor der Thermo-Druck-Behandlung zusammengeführt wird.

Es wurde überraschend festgestellt, daß die Zugabe von thermoplastischem Binder in das Gemisch, aus dem das Naßvlies hergestellt wird, ausreicht, um für einen genügenden Zusammenhalt der beiden Schichten nach der Thermo-Druck-Behandlung zu sorgen. Der aufwendige Zwischenschritt, eine der Laminatschichten mit einem Binder zu beschichten, kann also somit entfallen. Ein nach diesem Verfahren hergestelltes Laminat weist überraschend eine hohe Flexibilität, eine sehr geringe Dicke und trotzdem einen genügend hohen Modul auf. Auch ist die Widerstandskraft des Laminats gegen eine Delamination überraschend gut.

Die vorher erwähnte Thermo-Druck-Behandlung, die zur Herstellung des erfindungsgemäßen Laminats ebenfalls erforderlich ist, ist dem Fachmann hinreichend bekannt. Hierbei werden die aufeinandergelegten Schichten unter Druck derart erhitzt, daß der thermoplastische Binder, nicht jedoch der Werkstoff der Endlosfilamente, im Falle von Endlosbikomponentfilamenten jedoch der Mantel, schmilzt, wodurch über den thermoplastischen Binder die einzelnen Schichten miteinander verbunden werden. Hierbei sollte allerdings darauf geachtet werden, daß die Druckbehandlung möglichst über flächige Beaufschlagung erfolgt.

Die Herstellung eines Spinnvlieses (erste Schicht) aus thermoplastischem Endlosfilamenten ist ebenfalls hinreichend bekannt. Die zur Herstellung des erfindungsgemäßen Laminats einsetzbaren Spinnvliese enthalten bevorzugt Polyesterfäden, wobei es besonders günstig ist, wenn diese Endlosfäden Bikomponentenfäden sind, deren eine Komponente ein Polyester ist. Besonders bewährt haben sich hierbei Bikomponentenfäden, die insbesondere eine Kernmantelstruktur aufweisen, wobei die Kernkomponente ein Polyester ist. Die Mantelkomponente dient der Verfestigung des Spinnvlieses, wobei die Mantelkomponente bevorzugt aus dem gleichen thermoplastischen Werkstoff besteht als der thermoplastische Binder des Naßvlieses. Es versteht sich von selbst, daß die Polymere derart aufeinander abgestimmt sind, daß der thermoplastische Binder an den Endlosfilamenten des Spinnvlieses - gegebenenfalls an dem Mantel der Endlosbikomponentfilamente des Spinnvlieses - gut haftet. Derartige thermoplastische Binder sind hinreichend bekannt.

Bei der Herstellung des Naßvlieses (zweite Schicht) wird eine wäßrige Suspension aus Faser-Kurzschnitt, thermoplastischem Binder und ggf. weiteren Zusätzen auf eine wasserdurchlässige, die anderen Bestandteile rückhaltende Unterlage aufgebracht und zu einem Vlies getrocknet. Nach der Trocknung entsteht der für das Naßverfahren typische Vliesaufbau. Der thermoplastische Binder kann hierbei im Gemisch in Form von Pulver, Fibrillen, Fibriden, Fasern oder auch als Emulsion vorliegen. Zur besseren Handhabung des fertigen Naßvlieses kann zusätzlich ein chemisches Bindemittel und/oder Polyvinylalkohol-Fasern oder -Pulver beigegeben werden, wodurch beim Trocknen dem hergestellten Naßvlies eine verbesserte Festigkeit zur Weiterverarbeitung verliehen wird. Als Faser-Kurzschnitt im Sinne der vorliegenden Erfindung wird verstanden, daß die Fasern eine Länge bis maximal 50 mm aufweisen. Als Suspensionsflüssigkeit kommt in der Regel Wasser in Frage. Statt Wasser kann auch wäßriger Schaum als Suspensionsmedium verwendet werden. Schaum ermöglicht insbesondere die Verarbeitung von längeren Fasern (12 bis 50 mm) oder den Einsatz von thermoplastischem Binder in Pulverform. Wäßrige Schäume haben außerdem den Vorteil, daß in der Gesamtmischung (Faserkurzschnitt, Schaum, Binder und ggf. weitere Zusätze) in der Regel weniger Wasser enthalten ist und somit zur Trocknung des Naßvlieses weniger Energie zur Verdampfung des Wassers benötigt wird.

Das erfindungsgemäße Verfahren eignet sich hervorragend zur Herstellung eines Tri-Laminats, wobei dann beidseitig auf das Naßvlies je ein Spinnvlies vor der gemeinsamen Thermo-Druck-Behandlung aufgebracht wird. Hierbei reicht der im Naßvlies enthaltene thermoplastische Binder aus, um beide Spinnvliese mit dem Naßvlies zu verbinden. Diese Trilaminate zeichnen sich bei der Verwendung von Dachbahnen durch ausgezeichnete Verlegbarkeit, bei der Verwendung zur Herstellung von dreidimensionalen Formteilen über eine thermische Verformung durch besonders gute Verformbarkeit aus.

Besonders wirtschaftlich gelingt das erfindungsgemäße Verfahren, wenn zur Herstellung des Spinnvlieses Endlosfilamente ein- bzw. beidseitig dem getrockneten Naßvlies zugeführt werden, die bei der nachfolgenden Thermo-Druck-Behandlung zu ein- bzw. beidseitig mit dem Naßvlies verbundenen Spinnvliesen verfestigt werden.

In den Fällen, in denen der Modul des fertigen Laminats nicht ausreichend hoch sein sollte, können bei der Herstellung des Naßvlieses beim Aufbringen des Gemisches auf die wasserdurchlässige Unterlage zusätzlich aus Endlosfilamenten bestehende Garne, insbesondere Polyesterfilamente und/oder Glasfäden zugeführt werden. Hierbei ist es besonders günstig, wenn diese Endlosfilamente in gleichmäßigem Abstand zugeführt werden. Besonders günstig ist es, wenn die aus Endlosfilamenten bestehenden Garne in Form eines Fadengeleges (Scrims) zugeführt werden. Dadurch wird erreicht, daß das Scrim im Inneren des Naßvlieses angeordnet ist.

Im letzteren Falle entsteht ein Laminat, welches sich durch besondere Flexibilität und äußerst geringe Dicke auszeichnet. Aufgrund dessen, daß bei Durchführung des erfindungsgemäßen Verfahrens eine Beaufschlagung des Scrims mit thermoplastischem Binder unterbleiben kann, wird deutlich, daß das erfindungsgemäße Verfahren erheblich wirtschaftlicher als das bisher bekannte Verfahren durchgeführt werden kann.

Als anorganische Fasern für den Faserkurzschnitt haben sich insbesondere Glasfasern bestens bewährt.

Überraschenderweise hat sich herausgestellt, daß bei Durchführung des erfindungsgemäßen Verfahrens ein- oder beidseitig zwischen Vlies und Spinnvlies ein oder je ein Fadengelege (Scrim) vor der Thermo-Druck-Behandlung eingebracht werden kann, ohne daß dadurch der Widerstand gegen Delamination darunter leidet. Im vorliegenden Fall können 3- bis 5-schichtige Laminate hergestellt werden, wobei im einfachsten Fall das Laminat aus Spinnvlies, Scrim und Naßvlies bei einem Fünfschichtgebilde aus Spinnvlies, Scrim, Naßvlies, Scrim und Dünnvlies bestehen kann.

Nach Herstellung des erfindungsgemäßen Laminats ist bei den verschiedenen Schichten deutlich erkennbar, welche Schicht das Spinnvlies und welche Schicht das nach dem Naßverfahren hergestellte Vlies ist. Aufgrund der Ausdrücke "Spinnvlies" und "Naßvlies" ist das spezielle körperliche Aussehen charakterisiert, wie es sich auch aus ISO 9092 ergibt, auf welche hier ausdrücklich Bezug genommen wird.

Die erfindungsgemäß gestellte Aufgabe wird auch durch ein Laminat, bestehend aus mindestens zwei Schichten, wobei eine erste Schicht ein thermoplastische Endlosfilamente enthaltendes Spinnvlies, eine zweite Schicht ein anorganische Fasern enthaltendes Vlies ist, dadurch gelöst, daß die zweite Schicht ein nach dem Naßverfahren mit Faser-Kurzschnitt hergestelltes Vlies ist, welches einen thermoplastischen Binder enthält, über den die erste und die zweite Schicht thermisch miteinander verbunden ist.

Zur Erhöhung des Moduls des Laminats enthält bevorzugt auch die erste Schicht zusätzlich anorganische Endlosfilamente.

Insbesondere zur Erhöhung der Flammfestigkeit sind die erfindungsgemäß verwendeten anorganischen Fasern, ggf. die anorganischen Filamente, vorzugsweise Glasfasern bzw. Endlosglasfilamente.

Die erfindungsgemäßen Laminate sind nicht auf zwei Schichten beschränkt, sie können auch weitere Schichten enthalten. Beispielsweise kann bei einem Dreischichtgebilde das Naßvlies auf einer oder auf beiden Außenseiten des Spinnvlieses angeordnet sein oder umgekehrt. Soll das erfindungsgemäße Laminat besonders verarbeitungsfreundlich sein, empfiehlt es sich für die Außenlagen des Laminats Spinnvliese vorzusehen.

Als Spinnvliese eignen sich insbesondere solche Spinnvliese, die Endlosbikomponentenfäden enthalten. Hierbei kann das Spinnvlies auch vollständig aus Bikomponentenfäden bestehen. Als eine Komponente der beiden Komponenten der Bikomponentenfäden hat sich ein Polyester bewährt, insbesondere dann, wenn die Bikomponentenfäden eine Kern-Mantel-Struktur aufweisen, wobei der Kern aus einem Polyester besteht. Bevorzugt besteht die Mantelkomponente dieser Kern-Mantel-Fäden aus einem thermoplastischen Polymer, welches einen deutlich niedrigeren Schmelzpunkt als die Kernkomponente aufweist.

Das erfindungsgemäße Laminat läßt sich ausgezeichnet mit Imprägniermitteln oder Beschichtungen ausstatten. Auch kann das Spinnvlies zusätzlich thermoplastischen Binder - beispielsweise in Form der Mantelkomponente der oben erwähnten Kern-Mantel-Fäden - zur Bindung der Schichten enthalten.

Die erfindungsgemäßen Laminate lassen sich infolge ihres auch bei hohen Temperaturen hohen Moduls ausgezeichnet als Dachbahnen verarbeiten, die sich durch gute Handhabbarkeit auszeichnen. Auch zur Herstellung von Formteilen, wie sie beispielsweise bei der Innenausstattung von Autos, Autohimmel, Türverkleidung u.ä. verwendet werden, können die erfindungsgemäßen Laminate wegen ihrer guten thermischen Verformbarkeit ohne weiteres verwendet werden. Die Laminate eignen sich ebenfalls zur Herstellung von Filterwerkstoffen.

Die Laminate weisen besonders günstige flammabweisende und feuerhemmende Eigenschaften auf, wobei dann, wenn im Laminat mindestens ein Scrim aus Glasfäden enthalten ist, bei Belastung durch brennendes Material die zeitliche Wirkung dieser Eigenschaften deutlich verlängert wird. Sie eignen sich deshalb besonders zur brandhemmenden Ausstattung, beispielsweise von Außen- und/oder Innenwänden. Insbesondere haben sich die erfindungsgemäßen Laminate als Dachbedeckungsmembran bestens bewährt, wobei die Laminate hierzu mit Bitumen imprägniert werden, bevor sie in üblicher Weise auf dem Dach verlegt werden. Bei der Verlegung hat sich die flammabweisende Eigenschaft des Laminats, welches außerdem noch relativ dünn, flexibel und dimensionstabil ist, als besonders vorteilhaft herausgestellt. Dachbahnen, die erfindungsgemäße Trilaminate enthalten, passen sich besonders gut, d.h. beispielsweise ohne Wellenbildung, dem Untergrund an.

Die Erfindung wird anhand der nachfolgenden Beispiele näher erläutert.

### Beispiel 1:

Zunächst wird ein Naßvlies mit 50 g/m² hergestellt, indem eine wäßrige Suspension, die Glasfaser-Kurzschnitt (Glasfasern mit einer durchschnittlichen Länge von 12 mm und einer Dicke von 11 µm), 10 Gew.-%, bezogen auf das fertige getrocknete Naßvlies, Polyamid 6-Fasern (durchschnittliche Faserlänge 6 mm, Dicke 14 µm) und 5 Gew.-%, bezogen auf das fertige getrocknete Naßvlies, Polyvinylalkohol-Fasern (durchschnittliche Faserlänge 3 mm, Dicke 9 µm) enthält, auf eine wasserdurchlässige Unterlage aufgebracht und zu einem Vlies getrocknet wird. Das erhaltene Naßvlies wurde beidseitig mit Filamenten belegt und bei der Thermo-Druck-Behandlung zu Spinnvliesen verfestigt und mit dem Naßvlies verbunden. Beide Spinnvliese wiesen danach ein Flächengewicht von
100 g/m² auf, und waren aus Kern-Mantel-Endlosfilamenten, deren Kern aus Polyäthylenterephthalat und deren Mantel aus Polyamid 6 bestand, mit einer durchschnittlichen Filamentdicke von 38 µm hergestellt. Die Thermodruckbehandlung wurde derart durchgeführt, daß die drei übereinandergelegten Lagen zwischen zwei luftdurchlässige Transportbänder hindurchgeführt wurden, wobei durch das Dreischichtgebilde Heißluft mit einer Temperatur von etwa 225°C hindurchgeblasen wurde. Über die Transportbänder wurde während der Hitzebehandlung ein flächiger Druck von etwa 1500 Pa auf das Dreischichtgebilde aufgebracht. Das entstandene Laminat wurde mit bituminösem Material imprägniert und/oder beschichtet. Die hieraus entstandene Dachbahn wies ausgezeichnete Verlegeeigenschaften auf. Die verlegte Dachbahn hat die in DIN 4102 vorgeschriebenen Mindestwerte hinsichtlich der flammabweichenden und feuerhemmenden Eigenschaften deutlich überschritten.

### Beispiel 2:

Beispiel 1 wurde wiederholt mit folgenden Änderungen:
Das Naßvlies wies 30 g/m² auf, wobei der Anteil der als thermoplastischer Binder eingesetzten Polyamid 6-Fasern 20 Gew.-%, bezogen auf das fertige getrocknete Naßvlies, betrug. Zur Herstellung der Spinnvliese waren Kern-Mantel-Fäden mit einer durchschnittlichen Filamentdicke von 24 µm verwendet worden. Die Spinnvliese wiesen jeweils ein Gewicht von 50 g/m² auf. Dieses Laminat eignet sich besonders zur Herstellung von dreidimensionalen Formteilen.

### Beispiel 3:

Ein Naßvlies mit 50 g/m² wird hergestellt, wobei in einer wäßrigen Suspension Glasfaser-Kurzschnitt (durchschnittliche Länge 12 mm, Dicke 11 µm), 10 Gewichtsprozent, bezogen auf das getrocknete Naßvlies, Copolyester-Fasern (durchschnittliche Länge 6 mmm, Dicke 23 µm) und 10 Gewichtsprozent, bezogen auf das getrocknete Naßvlies, Polyvinylalkohol-Pulver enthalten waren. Diesem Naßvlies wurde einseitig ein vernadeltes Polyester-Spinnvlies (Polyesterfilamente mit einer Dicke von 23 µm) derart zugeführt, daß nach der Thermodruckbehandlung das Spinnvlies ein Flächengewicht von 200 g/m² aufwies. Bei der Thermo-Druck-Behandlung wurde heiße Luft mit etwa 225°C durch die beiden Schichten geblasen, wobei ein Druck von etwa 1500 Pa aufrechterhalten wurde. Das entstandene Bilaminat eignet sich besonders zur Herstellung von Dachbahnen.

## Patentansprüche

1. Verfahren zur Herstellung eines Laminats aus mindestens zwei Schichten, bei dem ein thermoplastische Endlosfilamente enthaltendes Spinnvlies als erste Schicht und ein nach dem Naßverfahren mit Faserkurzschnitt aus anorganischen Fasern hergestelltes Vlies (Naßvlies) als zweite Schicht über eine gemeinsame Thermo-Druck-Behandlung miteinander verbunden werden, dadurch gekennzeichnet, daß zur Herstellung des Naßvlieses zunächst Faser-Kurzschnitt, thermoplastischer Binder und ggf. weitere Zusätze in Wasser suspendiert auf eine wasserdurchlässige, die anderen Bestandteile rückhaltende Unterlage aufgebracht und zu einem Vlies getrocknet wird, und daß das getrocknete Naßvlies ohne weitere Zugabe von Binder mit dem Spinnvlies vor der Thermo-Druck-Behandlung zusammengeführt wird.

2. Verfahren nach Anspruch 1, dadurch gekennzeichnet, daß beidseitig auf das Naßvlies je ein Spinnvlies vor der gemeinsamen Thermo-Druck-Behandlung aufgebracht wird.

3. Verfahren nach Anspruch 1 oder 2, dadurch gekennzeichnet, daß zur Herstellung des Spinnvlieses Endlosfilamente ein- bzw. beidseitig dem getrockneten Naßvlies zugeführt werden, die bei der nachfolgenden Thermo-Druck-Behandlung zu ein- bzw. beidseitig mit dem Naßvlies verbundenen Spinnvliesen verfestigt werden.

4. Verfahren nach einem oder mehreren der Ansprüche 1 bis 3, dadurch gekennzeichnet, daß zur Herstellung des Naßvlieses beim Aufbringen der Suspension auf die wasserdurchlässige Unterlage zusätzlich aus Endlosfilamenten bestehende Garne zugeführt werden.

5. Verfahren nach Anspruch 4, dadurch gekennzeichnet, daß die aus Endlosfilamenten bestehenden Garne für das Naßvlies in gleichmäßigem Abstand zugeführt werden.

6. Verfahren nach Anspruch 4 oder 5, dadurch gekennzeichnet, daß die aus Endlosfilamenten bestehenden Garne für das Naßvlies in Form eines Fadengeleges (Scrims) zugeführt werden.

7. Verfahren nach einem oder mehreren der Ansprüche 1 bis 6, dadurch gekennzeichnet, daß das Spinnvlies Polyesterfäden enthält.

8. Verfahren nach einem oder mehreren der Ansprüche 1 bis 7, dadurch gekennzeichnet, daß das Spinnvlies Bikomponenten-Fäden enthält, deren eine Komponente ein Polyester ist.

9. Verfahren nach Anspruch 8, dadurch gekennzeichnet, daß die Bikomponentenfäden eine Kern-Mantelstruktur aufweisen, wobei die Kernkomponente ein Polyester ist.

10. Verfahren nach einem oder mehreren der Ansprüche 1 bis 9, dadurch gekennzeichnet, daß der Faserkurzschnitt Glasfasern enthält.

11. Verfahren nach einem oder mehreren der Ansprüche 4 bis 10, dadurch gekennzeichnet, daß die aus Endlosfilamenten bestehenden Garne, die bei der Herstellung des Naßvlieses zugeführt werden, Polyesterfilamente und/oder Glasfäden enthalten.

12. Verfahren nach einem oder mehreren der Ansprüche 1 bis 11, dadurch gekennzeichnet, daß ein- oder beidseitig zwischen Vlies und Spinnvlies ein oder je ein Fadengelege (Scrims) vor der Thermo-Druck-Behandlung eingebracht wird.

13. Laminat, bestehend aus mindestens zwei Schichten, wobei eine erste Schicht ein thermoplastische Endlosfilamente enthaltendes Spinnvlies, eine zweite Schicht ein anorganische Fasern enthaltendes Vlies ist, dadurch gekennzeichnet, daß die zweite Schicht ein nach dem Naßverfahren mit Faser-Kurzschnitt hergestelltes Vlies ist, welches einen thermoplastischen Binder enthält, über den die erste und die zweite Schicht thermisch miteinander verbunden ist.

14. Laminat nach Anspruch 13, dadurch gekennzeichnet, daß die erste Schicht zusätzlich anorganische Endlosfilamente enthält.

15. Laminat nach Anspruch 13 oder 14, dadurch gekennzeichnet, daß die anorganischen Fasern Glasfasern bzw. Endlosglasfilamente sind.

16. Laminat nach einem oder mehreren der Ansprüche 13 bis 15, dadurch gekennzeichnet, daß das Laminat eine dritte Schicht aufweist, welche ein thermoplastische Endlosfilamente enthaltendes Spinnvlies ist, wobei beide Spinnvliese außenseitig angeordnet sind.

17. Laminat nach einem oder mehreren der Ansprüche 13 bis 16, dadurch gekennzeichnet, daß das Spinnvlies Endlos-Bikomponentenfäden enthält.

18. Laminat nach Anspruch 17, dadurch gekennzeichnet, daß die eine Komponente der Bikomponentenfäden ein Polyester ist.

19. Laminat nach Anspruch 18, dadurch gekennzeichnet, daß die Bikomponentenfäden Kern-Mantel-Struktur aufweisen, wobei der Kern aus einem Polyester besteht.

## Claims

1. Method of manufacturing a laminate comprising at least two layers, wherein a spunlaid non-woven containing thermoplastic continuous filaments as a first layer and a non-woven made using the wet process with short cut fibres of inorganic fibres (wetlaid non-woven) as a second layer are joined to one another by means of a common thermocompression treatment, characterized in that, to manufacture the wetlaid non-woven, first the short cut fibres, thermoplastic binding agent and possibly further additives, suspended in water, are applied onto a base which is waterpermeable but retains the other constituents and are dried to form a nonwoven, and that the dried wetlaid non-woven without further addition of binding agent is brought together with the spunlaid non-woven prior to the thermocompression treatment.

2. Method according to claim 1, characterized in that a spunlaid non-woven is applied to both sides of the wetlaid nonwoven prior to the common thermocompression treatment.

3. Method according to claim 1 or 2, characterized in that, to manufacture the spunlaid non-woven, continuous filaments are supplied to one or both sides of the dried wetlaid non-woven, said filaments during the subseuquent thermocompression treatment being compacted to form spunlaid non-wovens bonded to one or both sides of the wetlaid non-woven.

4. Method according to one or more of claims 1 to 3, characterized in that, to manufacture the wetlaid non-woven, yarns made of continuous filaments are additionally supplied when the suspension is applied onto the water-permeable base.

5. Method according to claim 4, characterized in that the continuous-filament yarns for the wetlaid non-woven are supplied at a uniform distance.

6. Method according to claim 4 or 5, characterized in that the continuous-filament yarns for the wetlaid non-woven are supplied in the form of a scrim.

7. Method according to one or more of claims 1 to 6, characterized in that the spunlaid non-woven contains polyester fibres.

8. Method according to one or more claims 1 to 7, characterized in that the spunlaid non-woven contains bicomponent fibres, of which one component is a polyester.

9. Method according to claim 8, characterized in that the bicomponent fibres have a skin-core structure, the core component being a polyester.

10. Method according to one or more of claims 1 to 9, characterized in that the short cut fibres contain glass fibres.

11. Method according to one or more of claims 4 to 10, characterized in that the continuous-filament yarns which are supplied during manufacture of the wetlaid non-woven contain polyester filaments and/or glass filaments.

12. Method according to one or more of claims 1 to 11, characterized in that prior to the thermocompression treatment a scrim is introduced between the non-woven and the spunlaid non-woven at one or both sides.

13. Laminate comprising at least two layers, a first layer being a spunlaid non-woven containing thermoplastic continuous filaments, a second layer being a non-woven containing inorganic fibres, characterized in that the second layer is a non-woven manufactured using the wet process with short cut fibres and containing a thermoplastic binding agent by means of which the first and the second layer are thermally bonded to one another.

14. Laminate according to claim 13, characterized in that the first layer additionally contains inorganic continuous filaments.

15. Laminate according to claim 13 or 14, characterized in that the inorganic fibres are glass fibres or continuous glass filaments.

16. Laminate according to one or more of claims 13 to 15, characterized in that the laminate has a third layer which is a spunlaid non-woven containing thermoplastic continuous filaments, both spunlaid non-wovens being disposed on the outside.

17. Laminate according to one or more of claims 13 to 16, characterized in that the spunlaid non-woven contains continuous bicomponent filaments.

18. Laminate according to claim 17, characterized in that one component of the bicomponent filaments is a polyester.

19. Laminate according to claim 18, characterized in that the bicomponent filaments have a core-skin structure, the core being made of a polyester.

## Revendications

1. Procédé pour la fabrication d'un produit stratifié formé d'au moins deux couches, dans lequel un non tissé spunlaid contenant des filaments continus thermoplastiques, en tant que première couche, et fabriqué selon le procédé au mouillé à partir de fils coupés court de fibres inorganiques (un non tissé au mouillé), en tant que deuxième couche, sont assemblés entre eux par un traitement commun de thermocompression, caractérisé par par le fait que pour fabriquer le non tissé au mouillé, on applique tout d'abord une suspension dans l'eau de fils coupés court, de liant thermoplastique et d'autres ingrédients sur un support perméable à l'eau qui retient les autres constituants et on la sèche pour former un non tissé et par le fait que l'on réunit le non tissé au mouillé séché et le non tissé spunlaid sans ajout de liant avant le traitement par thermocompression.

2. Procédé selon la revendication 1, caractérisé par le fait qu'avant traitement par thermocompression, on applique respectivement des deux côtés du non tissé au mouillé un non tissé spunlaid.

3. Procédé selon la revendication 1 ou 2, caractérisé par le fait que pour réaliser non tissé spunlaid on ajoute d'un côté ou des deux côtés du non tissé au mouillé des filaments qui, lors du traitement par thermocompression venant ensuite, s'unissent pour former un non tissé spunlaid adhérant sur un côté ou sur les deux côtés du non tissé au mouillé.

4. Procédé selon l'une des revendications 1 à 3, caractérisé par le fait que pour fabriquer le non tissé au mouillé on ajoute des fils formés de filaments continus lors de l'application de la suspension sur le support perméable à l'eau.

5. Procédé selon la revendication 4, caractérisé par le fait que les fils formés de filaments utilisés pour la fabrication du non tissé au mouillé sont ajoutés à distance régulière.

6. Procédé selon la revendication 4 ou 5, caractérisé par le fait que les fils formés de filaments utilisés pour la fabrication du non tissé au mouillé sont ajoutés sous forme de canevas de fibres (scrim).

7. Procédé selon une ou plusieurs des revendications 1 à 6, caractérisé par le fait que le non tissé spunlaid contient des fils de polyester.

8. Procédé selon une ou plusieurs des revendications 1 à 7, caractérisé par le fait que 1 non tissé spunlaid contient des fils bi-composants, dont l'un des composants est un polyester.

9. Procédé selon la revendication 8, caractérisé par le fait que les fils bi-composants présentent une structure avec coeur et enveloppe, le composant du coeur étant un polyester.

10. Procédé selon une ou plusieurs des revendications 1 à 9, caractérisé par le fait que les fils coupés court contiennent des fibres de verre.

11. Procédé selon une ou plusieurs des revendications 4 à 10, caractérisé par le fait que les fils formés de filaments continus qui sont ajoutés lors de la fabrication du non tissé au mouillé contiennent des filaments de polyester et/ou des fibres de verre.

12. Procédé selon une ou plusieurs des revendications 1 à 11, caractérisé par le fait que, avant le traitement par thermocompression, on applique un canevas de fibres (scrims) d'un côté ou des deux côtés, entre le non tissé au mouillé et la non tissé spunlaid.

13. Produit stratifié formé d'au moins deux couches, dans lequel une première couche est constituée par un non tissé spunlaid contenant des filaments thermoplastiques et une deuxième couche est constituée par un non tissé contenant des fibres inorganiques, caractérisé par le fait que la deuxième couche est un non tissé fabriqué selon le procédé au mouillé à partir de fils coupés court qui contient un liant thermoplastique grâce auquel la première et la deuxième couche sont assemblées thermiquement.

14. Produit stratifié selon la revendication 13, caractérisé par le fait que la deuxième couche contient en outre des filaments continus inorganiques.

15. Produit stratifié selon la revendication 13 ou 14, caractérisé par le fait que les fils inorganiques sont des fibres de verre ou des filaments continus.

16. Produit stratifié selon une ou plusieurs des revendications 13 à 15, caractérisé par le fait que le produit stratifié comporte une troisième couche qui est un non tissé spunlaid avec des filaments continus, les deux non tissés de fils spunlaid étant disposées côté extérieur.

17. Produit stratifié selon une ou plusieurs des revendications 13 à 16, caractérisé par le fait que le non tissé spunlaid contient des fils continus bi-composants.

18. Produit stratifié selon la revendication 17, caractérisé par le fait que l'un des composants des fils continus bi-composants est un polyester.

19. Produit stratifié selon la revendication 18, caractérisé par le fait que les fils bi-composants ont une structure avec coeur et enveloppe, le coeur étant constitué par un polyester.
